# EUROPÄISCHE PATENTANMELDUNG

(11) **EP 4 459 223 A1**
(43) Veröffentlichungstag der Anmeldung: **06.11.2024**
(21) Anmeldenummer: 23170989.0
(22) Anmeldetag: 02.05.2023
(51) Int. Cl.: G01B 5/008, G01B 5/20, F16F 7/104, F16F 15/02

(54) **MESSARM FÜR EINE KOORDINATENMESSMASCHINE UND KOORDINATENMESSMASCHINE**

(71) Anmelder: Klingelnberg GmbH, 42499 Hückeswagen (DE)
(72) Erfinder: Ackerschott, Laura, 51688 Wipperfürth (DE); Daniels, Matthias, 51429 Bergisch Gladbach (DE); Bergen, Johann, 51702 Bergneustadt (DE); Wüster, Harald, 42477 Radevormwald (DE); Weber, Robin, 42499 Hückeswagen (DE)
(74) Vertreter: Janke Scholl Patentanwälte PartG mbB

(57) **Zusammenfassung**

Messarm für eine Koordinatenmessmaschine, mit einer Tragstruktur (12), wobei die Tragstruktur (12) einen Befestigungsabschnitt (14) zur Befestigung des Messarms (10) an einem verfahrbaren Schlitten (104) der Koordinatenmessmaschine (100) aufweist, mit einem Messkopf (16) zum Erfassen von Messwerten an einem zu messenden Bauteil, wobei der Messkopf (16) an der Tragstruktur (12) gehalten ist, wobei die Tragstruktur (12) einen Hilfsmassendämpfer (18) zur Schwingungsdämpfung aufweist.

## Beschreibung

Die vorliegende Erfindung betrifft einen Messarm für eine Koordinatenmessmaschine, mit einer Tragstruktur, wobei die Tragstruktur einen Befestigungsabschnitt zur Befestigung des Messarms an einem verfahrbaren Schlitten der Koordinatenmessmaschine aufweist und mit einem Messkopf zum Erfassen von Messwerten an einem zu messenden Bauteil, wobei der Messkopf an der Tragstruktur gehalten ist. Weiter betrifft die Erfindung eine Koordinatenmessmaschine mit einem solchen Messarm.

Koordinatenmessmaschinen dienen zur Vermessung von Bauteilen, um die Qualität eines gefertigten Bauteils zu überprüfen. Hierbei wird beispielsweise geprüft, ob vorgegebene Fertigungstoleranzen eingehalten worden sind. Zudem können anhand von gemessenen Bauteilabweichungen Korrekturen für einen Fertigungsprozess bestimmt werden. Die Ableitung von korrigierten Fertigungsparametern anhand von Bauteilabweichungen wird auch als Qualitätsregelkreis bezeichnet.

Koordinatenmessmaschinen weisen numerisch gesteuerte, angetriebene Achsen auf, um während der Messung eines Bauteils Relativbewegungen zwischen dem an dem Messarm gehaltenen Messkopf der Koordinatenmessmaschine, der Messwerte an dem Bauteil erfasst, und dem zu vermessenden Bauteil auszuführen.

Der Messarm wird daher während der Messung bewegt, um den Messkopf entlang eines vorgegebenen Messwegs bzw. zur Aufnahme vorgegebener Messpunkte relativ zum Bauteil zu positionieren. Ein solcher Messarm weist eine oder mehrere Eigenmoden mit den entsprechend zugeordneten Eigenfrequenzen auf, so dass es durch das Verfahren des Messarms zu Schwingungen des Messarms kommen kann, die das Messergebnis verfälschen können oder die Messung verzögern können.

Das Problem der Schwingungen eines Messarms tritt beispielsweise vermehrt während der Messung besonders großer Zahnräder auf, wie sie z.B. in der Windkraft verwendet werden. Um derartige Zahnräder messen zu können, und insbesondere innenliegende Merkmale solcher Zahnräder, wie z.B. Lagerstellen oder innenliegende Zähne von Innenverzahnungen, messen zu können, werden weit auskragende Messarme verwendet. Hierbei ist ein großer Abstand zwischen dem Antrieb bzw. der Lagerung des Messarms und der Messstelle im Bereich des Messkopfs gebildet. Es ist ersichtlich, dass eine derartige Konstruktion aufgrund des großen Abstands bzw. Hebels zur Messstelle sensitiver bezüglich des Einflusses von Schwingungen ist und eher zu Schwingungen neigt als eine Konstruktion, die ohne einen auskragenden Messarm auskommt und den Messkopf in unmittelbarer Nähe zur Lagerung bzw. zu den angetriebenen Achsen positioniert.

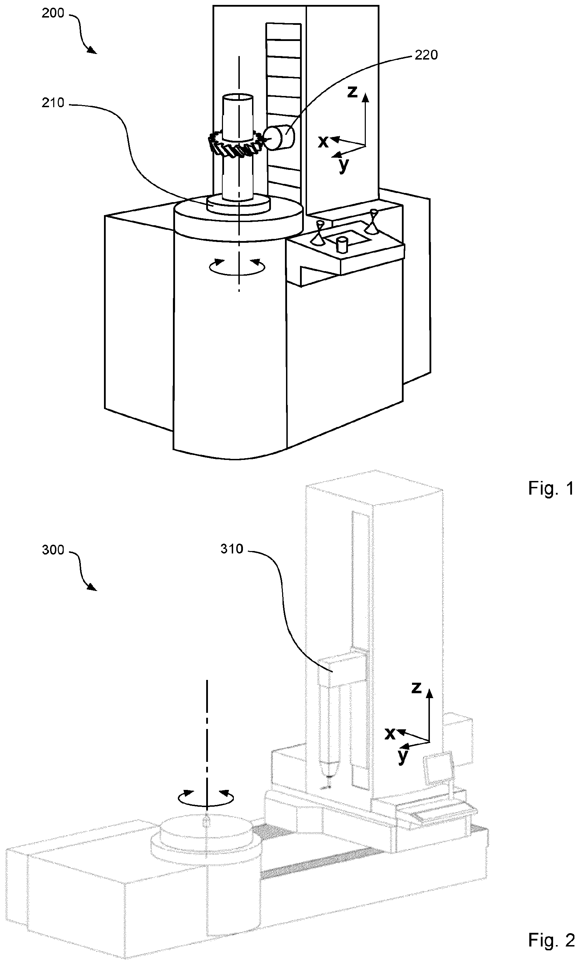

Fig. 1 zeigt hierzu exemplarisch eine Koordinatenmessmaschine 200 mit einem Drehtisch 210 zur Werkstückaufnahme, mit drei angetriebenen Linearachsen in Richtung x, y, z und mit einem Messkopf 220, der unmittelbar in an den Linearachsen, d.h. ohne weit auskragenden Messarm an der Koordinatenmessmaschine 200 gehalten ist. Fig. 2 zeigt im Vergleich dazu eine Koordinatenmessmaschine 300 mit weit auskragendem und weit ausfahrbarem Messarm 310, der zu den voranstehend genannten Schwingungen neigt.

Grundsätzlich ist es möglich, der zuvor beschriebene Problematik der Schwingungsanregung infolge der Bewegung der Achsen einer Koordinatenmessmaschine durch eine Aussteifung des Messarms oder durch eine Anpassung der Geschwindigkeit der Relativbewegungen zu begegnen. Eine Aussteifung des Messarms führt jedoch zu einem höheren Gewicht desselben, sodass auch die entsprechend zugeordneten Antriebe und Lagerungen gegebenenfalls größer und steifer dimensioniert werden müssen. Eine Anpassung der Geschwindigkeit der Relativbewegungen, d. h. insbesondere, die Achsbeschleunigungen und Achsgeschwindigkeiten zu reduzieren und ggf. Wartezeiten zum Abklingen der Schwingung vorzuhalten, führt zu einer Erhöhung der Messzeit, was einen ineffizienteren Messprozess zur Folge hat. Beide vorgenannten Varianten sind daher nachteilig und führen insgesamt zu höheren Kosten auf Kundenseite.

Vor diesem Hintergrund liegt der vorliegenden Erfindung die technische Problemstellung zugrunde, einen verbesserten Messarm anzugeben, der insbesondere eine zuverlässige Messung auch großer Bauteile ermöglicht, insbesondere eine zuverlässige Messung innenliegender Merkmale rotationssymmetrischer Bauteile, wie Innenverzahnungen oder dergleichen, ermöglicht. Weiter soll eine Koordinatenmessmaschine mit einem solchen Messarm angeben werden.

Die voranstehend beschriebene, technische Problemstellung wird mit den Merkmalen der unabhängigen Ansprüche gelöst. Weitere Ausgestaltungen der Erfindung ergeben sich aus den abhängigen Ansprüchen und der nachstehenden Beschreibung.

Gemäß einem ersten Aspekt betrifft die Erfindung einen Messarm für eine Koordinatenmessmaschine, mit einer Tragstruktur, wobei die Tragstruktur einen Befestigungsabschnitt zur Befestigung des Messarms an einem verfahrbaren Schlitten der Koordinatenmessmaschine aufweist, mit einem Messkopf zum Erfassen von Messwerten an einem zu messenden Bauteil, wobei der Messkopf an der Tragstruktur gehalten ist. Der Messarm zeichnet sich dadurch aus, dass die Tragstruktur des Messarms einen Hilfsmassendämpfer zur Schwingungsdämpfung aufweist.

Untersuchungen der Anmelderin haben gezeigt, dass eine sehr effiziente Lösung zur Beseitigung der einleitend beschriebenen Schwingungsproblematik die Integration eines Hilfsmassendämpfers in den Messarm ist. Auf diese Weise können Schwingungen reduziert bzw. gedämpft werden, ohne dass es zu Einbußen bezüglich der möglichen Messgeschwindigkeiten oder zu einer maßgeblichen Erhöhung des Gewichts des Messarms insgesamt kommt.

Die Tragstruktur des Messarms kann beispielsweise einen Stahlwerkstoff aufweisen. Die Verwendung von Stahl hat den Vorteil, dass eine robuste und steife Konstruktion des Messarms erreicht werden kann. Alternativ oder ergänzend kann vorgesehen sein, dass der Messarm einen metallischen Werkstoff aufweist, der ein geringeres Gewicht als Stahl aufweist, und/oder dass der Messarm einen Verbundwerkstoff aufweist, insbesondere einen Faserverbundwerkstoff aufweist.

Der Messkopf kann einen taktilen Messtaster aufweisen, wie einen schaltenden Messtaster, einen scannenden Messtaster oder dergleichen. Hierbei weist der taktile Messtaster beispielsweise eine Tastkugel auf, die dazu eingerichtet ist, mit einem zu messenden Bauteil in Anlage gebracht zu werden, um einen oder mehrere Messwerte aufzunehmen.

Alternativ oder ergänzend kann vorgesehen sein, dass der Messkopf einen optischen Messtaster aufweist, wobei ein solcher optischer Messtaster auch als optischer Abstandssensor bezeichnet werden kann. Ein solcher optischer Messtaster ist dazu eingerichtet, Messwerte berührungslos an dem Bauteil zu erfassen. Es kann vorgesehen, dass der optische Abstandssensor ein Punktsensor ist und nach einem der folgenden Messprinzipien arbeitet: Lasertriangulation, konfokale oder konfokal-chromatische Abstandsmessung, interferometrische Abstandsmessung, Doppel-Frequenzkamm-Spektroskopie oder dergleichen.

Es kann vorgesehen sein, dass der Messkopf an dem Hilfsmassendämpfer der Tragstruktur befestigt ist. Auf diese Weise kann sich die Dämpfungswirkung des Hilfsmassendämpfers in unmittelbarer Nähe des Messkopfs entfalten, sodass Schwingungen im Bereich des Messkopfs gedämpft werden können, um eine zügige und möglichst präzise Messwerterfassung zu ermöglichen.

Der Messkopf kann beispielsweise lösbar an dem Hilfsmassendämpfer befestigt sein. Beispielsweise kann der Messkopf mit dem Hilfsmassendämpfer verschraubt sein, sodass beispielsweise eine Schraubenverbindung oder zwei oder mehr Schraubenverbindungen vorgesehen sind, um den Messkopf an dem Hilfsmassendämpfer zu befestigen. Es versteht sich, dass der Messkopf gemäß alternativer Ausführungsbeispiele auch durch andere lösbare Befestigungsmittel oder Befestigungsarten mit dem Hilfsmassendämpfer verbunden sein kann, wie beispielsweise Klemmverbindungen, Rastverbindungen, Stiftverbindungen oder dergleichen.

Alternativ kann vorgesehen sein, dass der Messkopf unlösbar mit dem Hilfsmassendämpfer verbunden ist. Beispielsweise kann der Messkopf mittels einer Klebeverbindung oder mittels einer stoffschlüssigen Verbindung, wie einer Schweißverbindung, einer Lötverbindung oder dergleichen mit dem Hilfsmassendämpfer verbunden sein. Als unlösbare Verbindungen gelten vorliegend auch nicht zerstörungsfrei lösbare mechanische Verbindungen, wie Nietverbindungen oder dergleichen.

Gemäß einer Ausgestaltung des Messarms kann vorgesehen sein, dass die Tragstruktur Balkenelemente aufweist, die endseitig miteinander verbunden sind, und deren Längsachsen einen Winkel zueinander einschließen, insbesondere einen rechten Winkel zueinander einschließen.

Die Balkenelemente können längliche Balkenelemente sein, deren entlang der jeweiligen Längsachse gemessene Länge einem Vielfachen einer senkrecht zur Längsachse gemessenen Dicke entspricht. Insbesondere entspricht eine jeweilige entlang der Längsachse gemessene Länge eines jeweiligen Balkenelements mindestens dem Dreifachen der senkrecht zur Längsachse gemessenen Dicke des jeweiligen Balkenelements, insbesondere mindestens dem Vierfachen oder mindestens dem Fünffachen der senkrecht zur Längsachse gemessene Dicke des jeweiligen Balkenelements.

Beispielsweise kann vorgesehen sein, dass die Tragstruktur genau zwei Balkenelemente aufweist oder dass die Tragstruktur genau drei Balkenelemente aufweist.

Gemäß einer Ausgestaltung des Messarms kann vorgesehen sein, dass der Hilfsmassendämpfer an einem Endabschnitt eines Balkenelements der Tragstruktur befestigt ist.

Insbesondere kann vorgesehen sein, dass der Hilfsmassendämpfer lösbar an einem der Balkenelemente der Tragstruktur befestigt ist, insbesondere verschraubt ist. Alternativ kann vorgesehen sein, dass der Hilfsmassendämpfer unlösbar mit einem der Balkenelemente der Tragstruktur verbunden ist. Bezüglich der Definitionen einer lösbaren und unlösbaren Verbindung wird auf die voranstehenden Ausführungen zur Befestigung des Messkopfs verwiesen.

Nach einer Ausgestaltung des Messarms kann vorgesehen sein, dass der Hilfsmassendämpfer zwischen dem Endabschnitt des Balkenelements und dem Messkopf angeordnet ist. So kann eine kompakte Integration des Hilfsmassendämpfers in den Messarm erfolgen.

Es kann vorgesehen sein, dass eine senkrecht zur Längserstreckung des zugeordneten Balkenelements gemessene Dicke des Hilfsmassendämpfers kleiner oder gleich der ebenfalls quer zur Längserstreckung gemessenen Dicke des betreffenden Balkenelements ist, bzw. eine Querschnittsfläche des Hilfsmassendämpfers kleiner oder gleich eine Querschnittsfläche des zugeordneten Balkenelements ist, an dem der Hilfsmassendämpfer befestigt ist. Auf diese Weise kann eine kompakte Integration des Hilfsmassendämpfer in die Tragstruktur erfolgen, sodass das Balkenelement mit dem daran befestigten Hilfsmassendämpfer gemeinsam verkleidet werden können. Mit anderen Worten kann der Hilfsmassendämpfer in eine bestehende Konstruktion eines Messarms eingebunden werden, ohne die Dimensionen des betreffenden Messarms quer zur Längserstreckung des Balkenelements betrachtet zu vergrößern. Dies hat den Vorteil, dass durch den in die Tragstruktur integrierten Hilfsmassendämpfer keine zusätzliche Kollisionsstruktur entsteht, die bei relativen Verfahrbewegungen einer Koordinatenmessmaschine berücksichtigt werden müsste. Der erfindungsgemäße Messarm kann daher in der gleichen Art und Weise betrieben werden, wie auch ein Messarm ohne integriertes Dämpfungselement in Form des Hilfsmassendämpfers.

Nach einer Ausgestaltung des Messarms können drei Balkenelemente vorgesehen sein, die eine U-förmige Anordnung ausbilden. Die U-förmige Anordnung ermöglicht insbesondere die Messung von innenliegenden Merkmalen großer Zahnräder, z.B. mit einem Innendurchmesser größer oder gleich 1000 mm und/oder einem Modul größer 8 mm. Hierbei kann der Messkopf im Bereich einer Durchgangsöffnung des zu messenden Zahnrads positioniert werden, während ein Teil des Zahnrads zwischen die Schenkel des U-förmigen Messarms ragt, und so eine Kollision des Messarms mit dem Zahnrad während der Messung vermieden werden kann.

Der Befestigungsabschnitt kann an einem ersten frei auskragenden Endabschnitt der U-förmigen Anordnung ausgebildet sein und der Messkopf kann an einem zweiten frei auskragenden Endabschnitt der U-förmigen Anordnung angeordnet sein.

Gemäß einer Ausgestaltung des Messarms kann vorgesehen sein, dass der Hilfsmassendämpfer in zwei zueinander orthogonalen Raumrichtungen wirksam ist oder dass der Hilfsmassendämpfer in drei zueinander orthogonalen Raumrichtungen wirksam ist. Der Hilfsmassendämpfer kann daher derart ausgerichtet sein, dass seine Dämpfungswirkung insbesondere richtungsabhängig in vorgegebenen Raumrichtungen entfaltet wird. So kann eine gezielte Dämpfung bestimmter unerwünschter Schwingungen erreicht werden.

Nach einer Ausgestaltung des Messarms kann vorgesehen sein, dass der Hilfsmassendämpfer ein Gehäuse aufweist, dass innerhalb des Gehäuses mindestens ein Masseelement angeordnet sind, das mit Federn an dem Gehäuse befestigt ist und dass der Hilfsmassendämpfer mit einem Öl gefüllt ist. Insbesondere ist das Masseelement unmittelbar mit dem Öl in Kontakt, wobei eine Bewegung des Masseelements durch das Öl gedämpft wird. Insbesondere ist ein Spalt zwischen dem Masseelement und dem Gehäuse mit dem Öl gefüllt, sodass in dem Spalt eine Ölschicht gebildet ist, wobei eine Bewegung des Masseelements eine Scherung der Ölschicht bewirkt, was in einer geschwindigkeitsproportionalen Dämpfung resultiert. Bei dem Masseelement handelt es sich daher insbesondere um eine schwingende Masse, wobei das Masseelement weiter insbesondere ausschließlich durch die Federn an dem Gehäuse befestigt ist.

Das Masseelement kann ein Gewicht von 1 Kilogramm oder mehr aufweisen, insbesondere ein Gewicht von 5 Kilogramm oder mehr aufweisen. Das Masseelement kann ein Gewicht von 20 Kilogramm oder weniger aufweisen, insbesondere ein Gewicht von 10 Kilogramm oder weniger aufweisen.

Es kann vorgesehen sein, dass der Hilfsmassendämpfer zwei oder mehr weitere Masseelemente aufweist. Insbesondere kann vorgesehen sein, dass jedes der zwei oder mehr weiteren Masseelemente in voranstehend beschriebene Weise federnd mit dem Gehäuse verbunden ist und mit dem Öl in dämpfendem Wirkkontakt steht.

Es kann vorgesehen sein, dass zwischen einem jeweiligen Masseelement und dem Öl eines oder mehr Zwischenelemente vorgesehen sind, die eine Bewegung des Masseelements auf das Öl übertragen, wie eine Membran oder dergleichen.

Insbesondere ist vorgesehen, dass das Masseelement, bzw., soweit mehrere Masseelemente vorgesehen sind, jedes der Masseelemente, unmittelbar in Kontakt mit dem Öl steht und kein Zwischenelement zwischen einem jeweiligen Masseelement und dem Öl vorgesehen ist.

Die Federn können an einander abgewandten Seiten des Masseelements angeordnet sein, wobei insbesondere zwei oder mehr Federn je Raumrichtung vorgesehen sind und die Federn insbesondere in einer Parallelschaltung angeordnet sind. Die zweiseitige Befestigung des Masseelemente mittels der Federn ist eine Aufhängung des Masseelemente innerhalb des Gehäuses. Das Masseelement kann daher innerhalb der vorgegebenen Grenzen des Gehäuses und der jeweils möglichen Federwege frei schwingen.

Die Orientierung bzw. Ausrichtung der entsprechenden Federn entlang vorgegebener Raumrichtungen ermöglicht eine Definition des Schwingungs- und Dämpfungsverhaltens des Hilfsmassendämpfer entlang der entsprechenden Raumrichtungen, in dem eine jeweils vorgegebene Anzahl der betreffenden Federn mit einer jeweils vorgegebenen Steifigkeit verwendet werden.

Die Verwendung verschiedener Federn und/oder einer verschiedenen Anzahl von Federn je Raumrichtung ermöglicht daher eine richtungsspezifische Einstellung des Dämpfungsverhaltens. Beispielsweise können Zugfedern und/oder Druckfedern verwendet werden.

Es kann vorgesehen sein, dass der Hilfsmassendämpfer in einer ersten Dämpfungsrichtung eine erste Steifigkeit und/oder eine erste Dämpfung aufweist, dass der Hilfsmassendämpfer in einer zweiten Dämpfungsrichtung eine zweite Steifigkeit und/oder eine zweite Dämpfung aufweist und dass die erste Steifigkeit von der zweiten Steifigkeit verschieden ist und/oder dass die erste Dämpfung von der zweiten Dämpfung verschieden ist.

Gemäß einer Ausgestaltung des Hilfsmassendämpfers kann vorgesehen sein, dass die erste Steifigkeit unter Berücksichtigung einer ersten, am ungedämpften Messarm ermittelten Eigenmode definiert worden ist und dass die zweite Steifigkeit unter Berücksichtigung einer zweiten, am ungedämpften Messarm ermittelten Eigenmode definiert worden ist. Hierzu können beispielsweise eine experimentelle und/oder eine rechnergestützt simulierte Modalanalyse durchgeführt worden sein, um die Eigenmoden des ungedämpften Messarms und die zugeordneten Eigenfrequenzen und Schwingungsformen zu bestimmen.

Erfindungsgemäß wird eine Koordinatenmessmaschine angegeben, mit einem Drehtisch zur Aufnahme eines Werkstücks, wobei der Drehtisch eine Drehachse zum Rotieren des Werkstücks aufweist, mit einem Messarm, wobei der Messarm erfindungsgemäß ausgebildet ist und mit drei Linearachsen zum translatorischen Verschieben des Messarms relativ zum Werkstück. Die erfindungsgemäße Koordinatenmessmaschine ermöglicht insbesondere eine effiziente und präzise Messung auch großer Bauteile, da der Hilfsmassendämpfer der Tragstruktur des Messarms Schwingungen im Bereich des Messkopfs reduziert.

Gemäß einer Ausgestaltung der Koordinatenmessmaschine kann vorgesehen sein, dass der Hilfsmassendämpfer in drei zueinander orthogonalen Raumrichtungen wirksam ist, dass eine erste Linearachse der drei Linearachsen zum translatorischen Verschieben des Messarms in einer ersten Raumrichtung eingerichtet ist, dass eine zweite Linearachse der drei Linearachsen zum translatorischen Verschieben des Messarms in einer zweiten Raumrichtung eingerichtet ist und dass eine dritte Linearachse der drei Linearachsen zum translatorischen Verschieben des Messarms in einer dritten Raumrichtung eingerichtet ist, wobei die erste, die zweite und die dritte Raumrichtung jeweils orthogonal zueinander orientiert sind und dass die erste, zweite und dritte Raumrichtung kollinear zu den drei zueinander orthogonalen Raumrichtungen der Wirksamkeit des Hilfsmassendämpfers orientiert sind. Die Wirksamkeit des Hilfsmassendämpfers ist daher entlang der Bewegungsrichtungen der Linearachsen der Koordinatenmessmaschine orientiert. So können Schwingungen, die sich aufgrund der Achsbeschleunigungen der Linearachsen ergeben, gezielt richtungsabhängig gedämpft werden.

Gemäß alternativer Ausgestaltungen kann vorgesehen sein, dass der Hilfsmassendämpfer genau eine Wirkrichtung aufweist oder dass der Hilfsmassendämpfer genau zwei Wirkrichtungen aufweist. Der Hilfsmassendämpfer kann daher an den betreffenden Messarm angepasst sein.

Nachfolgend wird die Erfindung anhand einer Ausführungsbeispiele darstellenden Zeichnung näher beschrieben. Es zeigen jeweils schematisch:
- Fig. 1: eine Koordinatenmessmaschine gemäß dem Stand der Technik;
- Fig. 2: eine Koordinatenmessmaschine mit auskragendem Messarm gemäß dem Stand der Technik;
- Fig. 3: einen erfindungsgemäßen Messarm;
- Fig. 4: einen Hilfsmassendämpfer;
- Fig. 5: eine erfindungsgemäße Koordinatenmessmaschine.

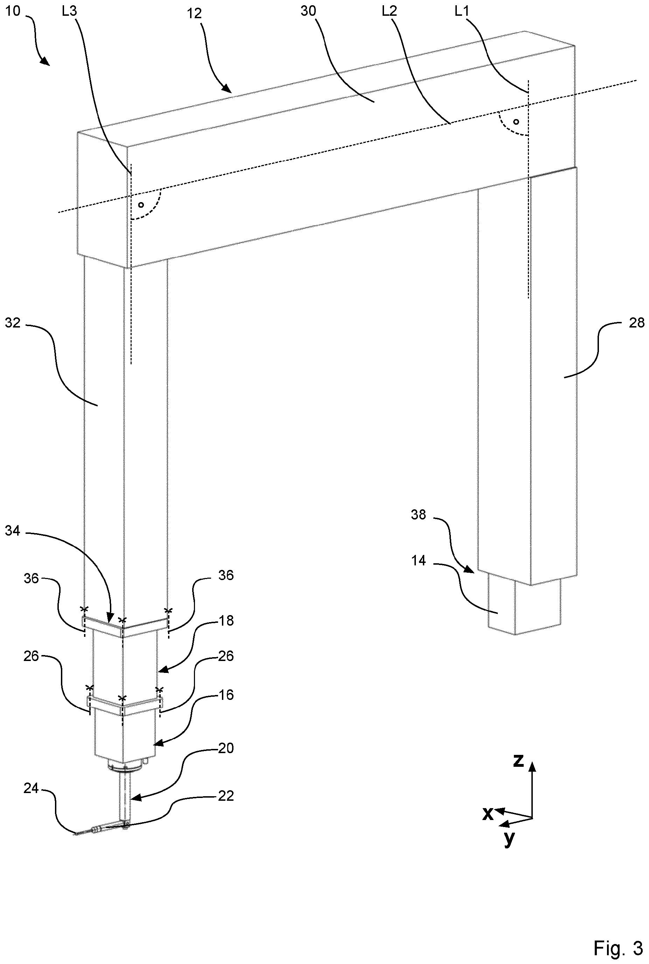

Fig. 3 zeigt einen erfindungsgemäßen Messarm 10 für eine Koordinatenmessmaschine.

Der Messarm 10 hat eine Tragstruktur 12. Die Tragstruktur 12 weist einen Befestigungsabschnitt 14 zur Befestigung des Messarms 10 an einem verfahrbaren Schlitten der Koordinatenmessmaschine auf.

Der Messarm 10 hat einen Messkopf 16 zum Erfassen von Messwerten an einem zu messenden Bauteil. Der Messkopf 16 ist an der Tragstruktur 12 gehalten.

Die Tragstruktur 12 weist einen Hilfsmassendämpfer 18 zu Schwingungsdämpfung auf.

Der Messkopf 16 weist einen taktilen Messtaster 20 auf, der einen Taststift 22 mit einer daran endseitig befestigten Tastkugel 24 hat. Die Tastkugel 24 ist dazu vorgesehen, mit einem zu messenden Bauteil in Anlage gebracht zu werden, um auf diese Weise Messwerte zu erfassen. Die Verwendung eines solchen taktilen Messtasters 20 mit einer entsprechenden Tastkugel 24 ist Stand der Technik im Bereich der Koordinatenmesstechnik. Der Messtaster 20 ist lösbar und austauschbar an dem Messkopf 16 gehalten.

Der Messkopf 16 ist an dem Hilfsmassendämpfer 18 der Tragstruktur 12 befestigt. Vorliegend ist der Messkopf 16 lösbar und austauschbar an dem Hilfsmassendämpfer 18 befestigt - und zwar mittels Schraubenverbindungen 26, die lediglich schematisch angedeutet sind.

Die Tragstruktur 12 weist drei Balkenelemente 28, 30, 32 auf. Die Balkenelemente 28, 30, 32 sind endseitig miteinander verbunden. Im Einzelnen ist das Balkenelement 28 mit dem Balkenelement 30 endseitig verbunden und das Balkenelement 30 ist endseitig mit dem Balkenelement 32 verbunden. Die Längsachsen L1 und L2 der Balkenelemente 28 und 30 schließen einen rechten Winkel zueinander ein. Die Längsachsen L2 und L3 der Balkenelemente 30, 32 schließen einen rechten Winkel zueinander ein.

Die Längsachse L1 ist parallel zur z-Achse orientiert. Die Längsachse L2 ist parallel zur y-Achse orientiert. Die Längsachse L3 ist parallel zur z-Achse orientiert.

Der Hilfsmassendämpfer 18 ist an einem Endabschnitt 34 des Balkenelements 32 der Tragstruktur 12 befestigt. Vorliegend ist der Hilfsmassendämpfer 28 lösbar mit dem Balkenelement 32 der Tragstruktur verbunden - und zwar mittels Schraubenverbindungen 36, die wiederum lediglich schematisch angedeutet sind.

Der Hilfsmassendämpfer 18 ist vorliegend zwischen dem Endabschnitt 34 des Balkenelements 32 und dem Messkopf 16 angeordnet.

Die drei Balkenelemente 28, 30, 32 bilden vorliegend eine U-förmige Anordnung aus. Der Befestigungsabschnitt 14 ist hierbei an einem ersten frei auskragenden Endabschnitt 38 der U-förmigen Anordnung ausgebildet. Der Messkopf 16 ist an einem zweiten frei auskragenden Endabschnitt der U-förmigen Anordnung ausgebildet, wobei der zweite frei auskragende Endabschnitt vorliegend durch den Hilfsmassendämpfer 18 gebildet ist.

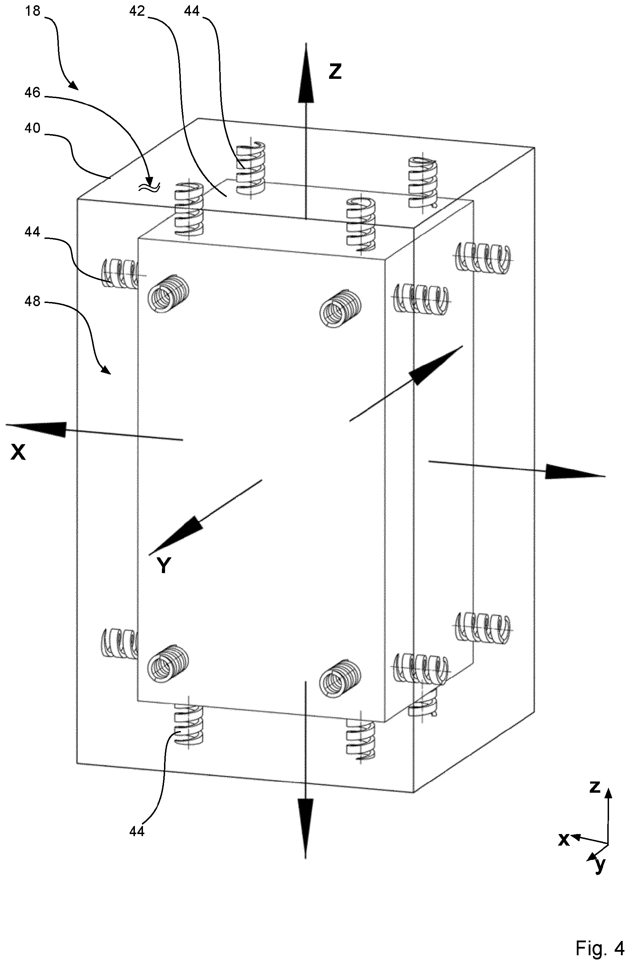

Fig. 4 zeigt den Hilfsmassendämpfer 18 in einer schematischen Darstellung. Der Hilfsmassendämpfer ist vorliegend in drei zueinander orthogonalen Raumrichtungen X, Y, Z wirksam, wobei die Raumrichtungen X, Y, Z kollinear zu den Achsen des eingezeichneten Koordinatensystems x, y, z orientiert sind. Zur Verdeutlichung, dass der Hilfsmassendämpfer 18 selbstverständlich auch in negativer Richtung der entsprechenden zueinander orthogonalen Raumrichtungen X, Y, Z wirksam ist, sind jeweils zusätzliche Richtungspfeile in entsprechend entgegengesetzter Richtung eingezeichnet worden.

Der Hilfsmassendämpfer 18 weist ein Gehäuse 40 auf. Innerhalb des Gehäuses 40 ist ein Masseelement 42 angeordnet. Das Masseelement 42 ist eine schwingungsfähigen Masse, die in jeder der drei vorgenannten Raumrichtungen X, Y, Z bewegbar innerhalb des Gehäuses 40 gehalten ist.

Das Masseelement 42 ist mittels Federn 44 an dem Gehäuse 40 befestigt.

Die Federn 44 sind jeweils an einander abgewandten Seiten des Masseelements angeordnet 42, sodass das Masseelement 42 in jeder möglichen Bewegungsrichtung federnd elastisch gegen das Gehäuse 40 abgestützt ist.

Je Raumrichtung X, Y, Z sind eine Mehrzahl von Federn 44 vorgesehen, die für jede Seite betrachtet in Parallelschaltung angeordnet sind.

Die Steifigkeit des Hilfsmassendämpfer kann sich, je nach Raumrichtung X, Y, Z, unterscheiden. Dies kann durch die Anzahl der Federn oder die Dimension oder Art der gewählten Federn definiert werden.

Vorliegend sind die Steifigkeiten des Hilfsmassendämpfer 18 unter Berücksichtigung ermittelter Eigenmoden definiert worden.

Das Gehäuse 40 des Hilfsmassendämpfers 18 ist mit einem Öl 46 gefüllt. Das Öl 46 füllt dabei einen zwischen dem Masseelemente 42 und dem Gehäuse 40 gebildeten Spalt 48 aus, sodass eine Bewegung des Masseelements 42 relativ zu dem Gehäuse 40 in einer der Richtungen X, Y, Z, eine Scherung des Öls 46 und eine damit einhergehende geschwindigkeitsproportionale Dämpfung bewirkt.

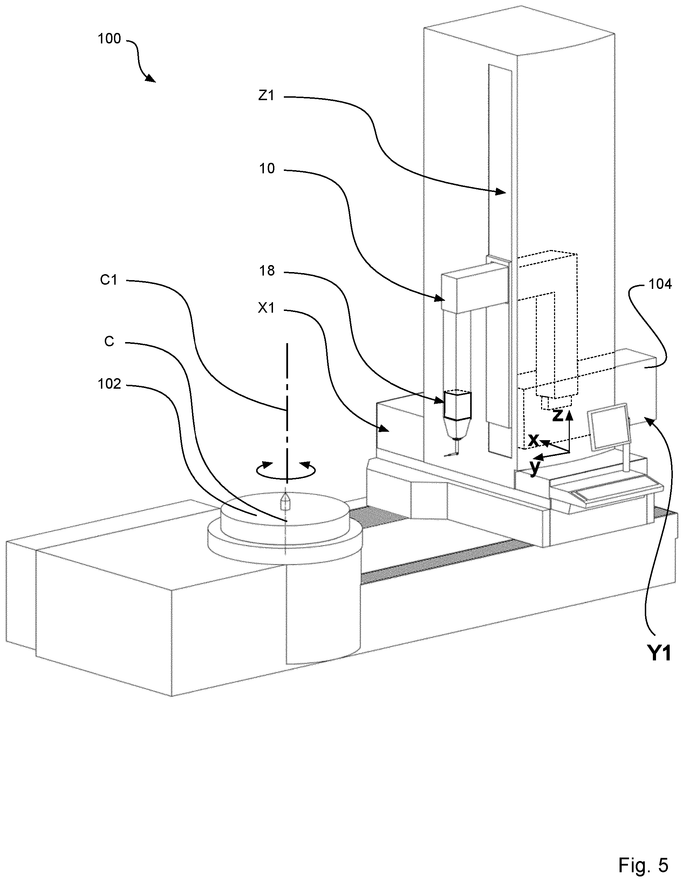

Fig. 5 zeigt eine erfindungsgemäße Koordinatenmessmaschine 100. Die Koordinatenmessmaschine 100 hat einen Drehtisch 102 zur Aufnahme eines zu messenden Bauteils bzw. Werkstücks, wie zum Beispiel ein innenverzahntes Zahnrad oder dergleichen.

Der Drehtisch 102 weist eine CNC-gesteuerte Rotationsachse C1 bzw. Drehachse C1 zum Rotieren des zu messenden Werkstücks um seine eigene Achse C auf. Bei dem Werkstück kann es sich z.B. um ein rotationssymmetrisches Bauteil, wie ein innenverzahntes Zahnrad oder dergleichen.

Die Koordinatenmessmaschine 100 hat einen erfindungsgemäßen Messarm 10, der den Hilfsmassendämpfer 18 aufweist.

Die Koordinatenmessmaschine 100 hat zudem drei Linearachsen X1, Y1, Z1 zum translatorischen Verschieben des Messarms 10 relativ zum Werkstück entlang der orthogonalen Raumrichtungen x, y, z, wobei x, y, z ein kartesisches Koordinatensystem bilden.

Eine erste Linearachse X1 der drei Linearachsen X1, Y1, Z1 ist zum translatorischen Verschieben des Messarms in einer ersten Raumrichtung x der orthogonalen Raumrichtungen x, y, z eingerichtet. Eine zweite Linearachse Y1 der drei Linearachsen X1, Y1, Z1 ist zum translatorischen Verschieben des Messarms in einer zweiten Raumrichtung y der orthogonalen Raumrichtungen x, y, z eingerichtet. Eine dritte Linearachse Z1 der drei Linearachsen X1, Y1, Z1 ist zum translatorischen Verschieben des Messarms in einer dritten Raumrichtung z der orthogonalen Raumrichtungen x, y, z eingerichtet.

Die erste, zweite und dritte Raumrichtung x, y, z sind kollinear zur den drei zueinander orthogonalen Raumrichtungen X, Y, Z der Wirksamkeit des Hilfsmassendämpfers 18 orientiert.

In Fig. 5 ist schematisch angedeutet, dass der Messarm 10 mit seinem Befestigungsabschnitt 14 an einem in y-Richtung verfahrbaren Schlitten 104 der Koordinatenmessmaschine 100 befestigt ist.

### BEZUGSZEICHEN

- 10: Messarm
- 12: Tragstruktur
- 14: Befestigungsabschnitt
- 16: Messkopf
- 18: Hilfsmassendämpfer
- 20: Messtaster
- 22: Taststift
- 24: Tastkugel
- 26: Schraubenverbindung
- 28: Balkenelement
- 30: Balkenelement
- 32: Balkenelement
- 34: Endabschnitt
- 36: Schraubenverbindung
- 38: Endabschnitt
- 40: Gehäuse
- 42: Masseelement
- 44: Feder
- 46: Öl
- 48: Spalt
- 100: Koordinatenmessmaschine
- 102: Drehtisch
- 104: Schlitten
- 200: Koordinatenmessmaschine
- 210: Drehtisch
- 220: Messkopf
- 300: Koordinatenmessmaschine
- 310: ungedämpfter Messarm
- L1: Längsachse
- L2: Längsachse
- L3: Längsachse
- x: Raumrichtung
- X1: Linearachse
- y: Raumrichtung
- Y1: Linearachse
- z: Raumrichtung
- Z1: Linearachse
- C: Werkstückachse
- C1: Drehachse / Rotationsachse
- X: Wirkrichtung des Hilfsmassendämpfers
- Y: Wirkrichtung des Hilfsmassendämpfers
- Z: Wirkrichtung des Hilfsmassendämpfers

## Patentansprüche

1. Messarm für eine Koordinatenmessmaschine,
- mit einer Tragstruktur (12), wobei die Tragstruktur (12) einen Befestigungsabschnitt (14) zur Befestigung des Messarms (10) an einem verfahrbaren Schlitten (104) der Koordinatenmessmaschine (100) aufweist,
- mit einem Messkopf (16) zum Erfassen von Messwerten an einem zu messenden Bauteil, wobei der Messkopf (16) an der Tragstruktur (12) gehalten ist,
**dadurch gekennzeichnet, dass**
- die Tragstruktur (12) einen Hilfsmassendämpfer (18) zur Schwingungsdämpfung aufweist.

2. Messarm nach Anspruch 1,
**dadurch gekennzeichnet, dass**
der Messkopf (16) an dem Hilfsmassendämpfer (18) der Tragstruktur (12) befestigt ist.

3. Messarm nach einem der voranstehenden Ansprüche,
**dadurch gekennzeichnet, dass**
- die Tragstruktur (12) Balkenelemente (28, 30, 32) aufweist, die endseitig miteinander verbunden sind, und deren Längsachsen (L1, L2, L3) einen Winkel zueinander einschließen, insbesondere einen rechten Winkel zueinander einschließen,
- wobei die Tragstruktur (12) insbesondere genau zwei Balkenelemente oder genau drei Balkenelemente (28, 30, 32) aufweist.

4. Messarm nach Anspruch 3,
**dadurch gekennzeichnet, dass**
der Hilfsmassendämpfer (18) an einem Endabschnitt (34) eines Balkenelements (32) der Tragstruktur (12) befestigt ist.

5. Messarm nach Anspruch 2 und Anspruch 4,
**dadurch gekennzeichnet, dass**
der Hilfsmassendämpfer (18) zwischen dem Endabschnitt (34) des Balkenelements (32) und dem Messkopf (16) angeordnet ist.

6. Messarm nach einem der Ansprüche 3 bis 5,
**dadurch gekennzeichnet, dass**
- drei Balkenelemente (28, 30, 32) vorgesehen sind, die eine U-förmige Anordnung ausbilden,
- wobei insbesondere der Befestigungsabschnitt (14) an einem ersten frei auskragenden Endabschnitt (38) der U-förmigen Anordnung ausgebildet ist und
- wobei der Messkopf (16) insbesondere an einem zweiten frei auskragenden Endabschnitt (18) der U-förmigen Anordnung angeordnet ist.

7. Messarm nach einem der voranstehenden Ansprüche,
**dadurch gekennzeichnet,**
- **dass** der Hilfsmassendämpfer in zwei zueinander orthogonalen Raumrichtungen wirksam ist oder
- **dass** der Hilfsmassendämpfer (18) in drei zueinander orthogonalen Raumrichtungen (X, Y, Z) wirksam ist.

8. Messarm nach einem der voranstehenden Ansprüche,
**dadurch gekennzeichnet,**
- **dass** der Hilfsmassendämpfer (18) ein Gehäuse (40) aufweist,
- **dass** innerhalb des Gehäuses (40) mindestens ein Masseelement (42) angeordnetist, das mit Federn (44) an dem Gehäuse (40) befestigt ist und
- **dass** der Hilfsmassendämpfer (18) mit einem Öl (46) gefüllt ist.

9. Messarm nach Anspruch 7 und Anspruch 8,
**dadurch gekennzeichnet,**
- **dass** die Federn (44) an einander abgewandten Seiten des Masseelements (42) angeordnet sind,
- wobei insbesondere zwei oder mehr Federn (44) je Raumrichtung (X, Y, Z) vorgesehen sind und die Federn (44) insbesondere in einer Parallelschaltung angeordnet sind.

10. Messarm nach einem der Ansprüche 7 bis 9,
**dadurch gekennzeichnet,**
- **dass** der Hilfsmassendämpfer (18) in einer ersten Dämpfungsrichtung eine erste Steifigkeit und/oder eine erste Dämpfung aufweist,
- **dass** der Hilfsmassendämpfer (18) in einer zweiten Dämpfungsrichtung eine zweite Steifigkeit und/oder eine zweite Dämpfung aufweist und
- **dass** die erste Steifigkeit von der zweiten Steifigkeit verschieden ist und/oder dass die erste Dämpfung von der zweiten Dämpfung verschieden ist..

11. Messarm nach Anspruch 10,
**dadurch gekennzeichnet,**
- **dass** die erste Steifigkeit unter Berücksichtigung einer ersten, am ungedämpften Messarm (310) ermittelten Eigenmode definiert worden ist und
- **dass** die zweite Steifigkeit unter Berücksichtigung einer zweiten, am ungedämpften Messarm (310) ermittelten Eigenmode definiert worden ist.

12. Koordinatenmessmaschine,
- mit einem Drehtisch (102) zur Aufnahme eines Werkstücks, wobei der Drehtisch (102) eine Drehachse (C1) zum Rotieren des Werkstücks aufweist,
- mit einem Messarm (10), wobei der Messarm (10) gemäß einem der voranstehenden Ansprüche 1 - 11 ausgebildet ist und
- mit drei Linearachsen (X1, Y1, Z1) zum translatorischen Verschieben des Messarms (10) relativ zum Werkstück.

13. Koordinatenmessmaschine nach Anspruch 12,
**dadurch gekennzeichnet,**
- **dass** der Messarm (10) gemäß Anspruch 7 ausgebildet ist,
- **dass** eine erste Linearachse (X1) der drei Linearachsen (X1, Y1, Z1) zum translatorischen Verschieben des Messarms (10) in einer ersten Raumrichtung (x) eingerichtet ist,
- **dass** eine zweite Linearachse (Y1) der drei Linearachsen (X1, Y1, Z1) zum translatorischen Verschieben des Messarms (10) in einer zweiten Raumrichtung (y) eingerichtet ist und
- **dass** eine dritte Linearachse (Z1) der drei Linearachsen (X1, Y1, Z1) zum translatorischen Verschieben des Messarms (10) in einer dritten Raumrichtung (z) eingerichtet ist,
- wobei die erste, die zweite und die dritte Raumrichtung (x, y, z) jeweils orthogonal zueinander orientiert sind
- und **dass** die erste, zweite und dritte Raumrichtung (x, y, z) kollinear zur den drei zueinander orthogonalen Raumrichtungen (X, Y, Z) der Wirksamkeit des Hilfsmassendämpfers (18) orientiert sind.
